Europäisches Patentamt

European Patent Office

Office européen des brevets

(19)

(11) Publication number: **0 078 854**

**A1**

# EUROPEAN PATENT APPLICATION

published in accordance with Art. 158(3) EPC

(21) Application number: 82901439.8

(22) Date of filing: 18.05.82

Data of the international application taken as a basis:

(86) International application number:
PCT/JP82/00176

(87) International publication number:
WO82/04129 (25.11.82 82/28)

(51) Int. Cl.³: **G 01 P 3/489**

(30) Priority: 18.05.81 JP 74677/81

(43) Date of publication of application:
18.05.83 Bulletin 83/20

(84) Designated Contracting States:
DE FR GB

(71) Applicant: Fanuc Ltd
5-1, Asahigaoka, 3-chome
Hino-shi, Tokyo 191(JP)

(72) Inventor: KURAKAKE, Mitsuo
Izumi-Haitsu 103, 3-3-10 Tamadaira
Hino-shi, Tokyo 191(JP)

(74) Representative: Fane, Christopher Robin King et al,
HASELTINE LAKE & CO. Hazlitt House 28 Southampton
Buildings Chancery Lane
London, WC2A 1AT(GB)

(54) SPEED DETECTING DEVICE.

(57) A speed detecting device for a motor or a movable unit in a machine, which is capable of quickly and accurately detecting speed. This device includes a position detector (101) for generating pulses (Pc, Pc') of the number proportional to the rotating quantity of the motor or the moved distance of the movable unit, a counter (103, 104) for counting the period of pulses generated from the position detector by counting the clock pulses (CP), registers (106, 107) set in the content of the counters (103, 104) in synchronization with the pulse (Pc) generated from the position detector, and a dividing means (108) for dividing binary or decimal numbers. Thus, the speed of the motor is detected by dividing with the dividing means with the period stored in the registers.

Fig.3

<u>DESCRIPTION</u>

SPEED DETECTING APPARATUS

## Technical Field

The present invention relates to a speed detecting apparatus and, more particularly, to a speed detecting apparatus capable of detecting speeds with great accuracy during low speed operation.

## Background Art

In the control of DC and AC motors, it is general practice to feedback a signal indicative of actual motor speed. For example, in vector control wherein three-phase primary current commands are generated by digital processing and an AC motor is driven on the basis of these primary current commands, a speed difference $\Delta v$ between a commanded speed and an actual speed is supplied as an input along with the actual speed $\underline{n}$, and digital processing is executed by a microcomputer to produce the three-phase primary current commands as output signals.

When using an AC motor for driving the spindle or feed shaft of a maching tool, it is required that the spindle and controlled drive shaft be rotated over a wide range of from low to high speeds. For accurate control, the rotational speed must be detected with great accuracy during both high- and low-speed operation.

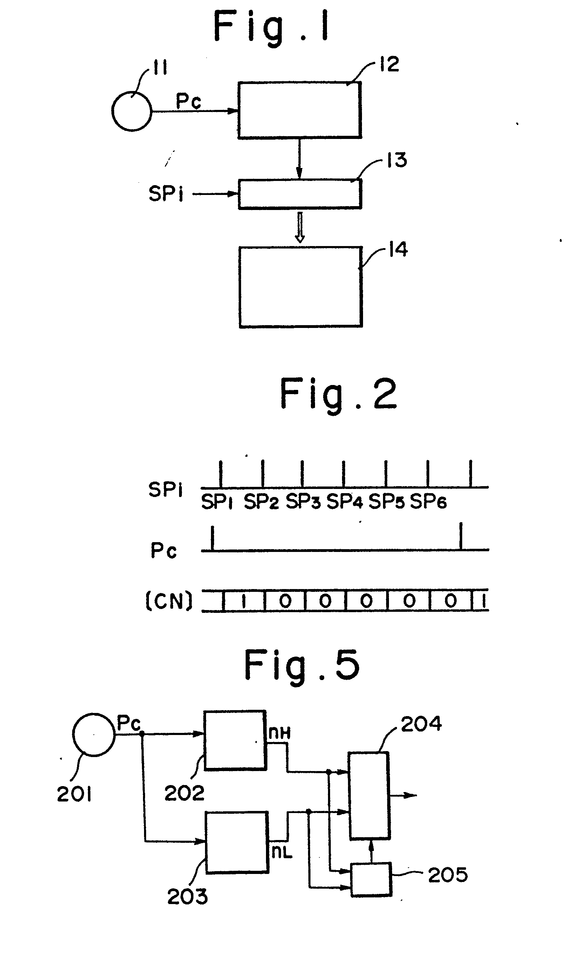

According to a conventional speed detecting system, two-phase signals which are $\pi/2$ out of phase with each other and which have a frequency $f$ proportional to the rotational speed of a motor are generated by a pulse coder. These two-phase signals are then converted into signals of a frequency 4f via a quadrupling circuit. Finally, a frequency-to-voltage converter, for generating a voltage proportional to the frequency 4f, produces a voltage output (actual speed voltage TSA) that is proportional to the rotational speed. When the motor speed drops to a low level in practicing the method of the above type, however, the magnitude of the output voltage produced by the frequency-to-voltage converter is no longer proportional to the rotational speed and undergoes an abrupt decline. Furthermore, rather than subjecting the frequency of the pulsed signal from the pulse coder to a frequency-to-voltage conversion, it is preferred, as far as LSI techniques are concerned, to have a microcomputer read the pulsed signal directly as a digital quantity. Indeed, various methods of reading speed digitally have been proposed. Fig. 1 is an explanatory view of an example of the prior art, in which pulses generated by a pulse coder are counted for a predetermined period of time and applied to a microcomputer. According to this method, a pulse coder 11 is provided for generating a pulse each time a motor rotates by a predetermined amount. The pulses are counted by a counter 12 the content whereof is transferred to a register 13 regularly at predetermined times, the counter being reset simultaneously therewith. Thenceforth the content of the register is read as the actual speed by a microcomputer 14. The foregoing operation is repeated thereafter to read the actual speed in digital fashion. While this method enables speed to be sensed with good accuracy when the motor is rotating at high speed, this is not the case at low motor speeds because the period of the pulses generated by the pulse coder becomes too large at such time. To improve resolution at low speed, the number of pulses generated by the pulse coder per revolution must be increased, or the reading period must be lengthened. However, since the number of pulses which can be produced by the pulse coder 11 is limited to 10,000 per revolution, a significant increase in resolution cannot be obtained. The alternate approach, namely that of lengthening the reading period, results in poorer control response. More specifically, good response cannot be obtained unless the reading period (sampling period) for the data in register 13 as read by the microprocessor is on the order of 1 msec, in view of the response of the speed control system. In this connection, reference will be had to Fig. 2 to describe a case where the sampling period is 1 msec, the pulse coder 11 produces pulses Pc at a rate of 10,000 pulses per revolution, and the motor rotates at a very low speed of 1 rpm. In Fig. 2, SPi denotes the sampling pulses, Pc the pulses produced by the pulse

coder 11, and [CN] the value of the count in counter 12. The pulses Pc from the pulse generator 11 are counted by counter 12 as described above, the data in the counter is set in register 13 and the counter is reset in sync with the sampling pulses SPi, and the content of the register is subsequently read by the microcomputer 14. Since the sampling period is 1 msec and the period of the pulses Pc is 6 msec, the value of the count [CN] in counter 12 is one when the initial sampling pulse SPi is generated, but [CN] = 0 for the sampling pulses SP2 through SP6. In other words, the speed data input to the microcomputer is the intermittent data 1,0,0,0,0,0. This makes it impossible to achieve accurate control of speed with a quick response.

Accordingly, the object of the present invention is to provide a novel speed detecting apparatus which enables motor speed prevailing during low-speed operation to be detected with great accuracy in the form of a digital quantity without any deleterious effect upon motor response. Another object of the present invention is to provide a speed detecting apparatus capable of detecting the rotational speed of a motor with great accuracy from very low to high speeds.

Disclosure of the Invention

The present invention discloses a speed detecting apparatus having a position sensor for generating pulses the number whereof is proportional to the amount of rotation of a motor or the amount of movement of a movable machine element, the speed of the motor or of the movable machine element being detected by using the pulses generated by the position sensor. The speed sensing apparatus is provided with a counter which counts clock pulses for timing the period of the pulses generated by the position sensor, a register in which the content of the counter is set in synchronism with the pulses generated by the position sensor, and dividing means for performing binary or decimal division, wherein an arithmetic dividing operation is performed by the dividing means using the period stored in the register to detect the speed of the motor or movable machine element. According to the present invention, the speed of the motor or movable machine element during low speed operation can be detected with great accuracy as a digital quantity. Furthermore, speed detection with great accuracy from low to high speeds is capable of being achieved by switching, in accordance with the speed of the motor or of the movable machine element, between a method of detecting speed based on counting the number of pulses generated by the position sensor, and a method of detecting speed based on timing the period of the pulses.

Brief Description of the Drawings

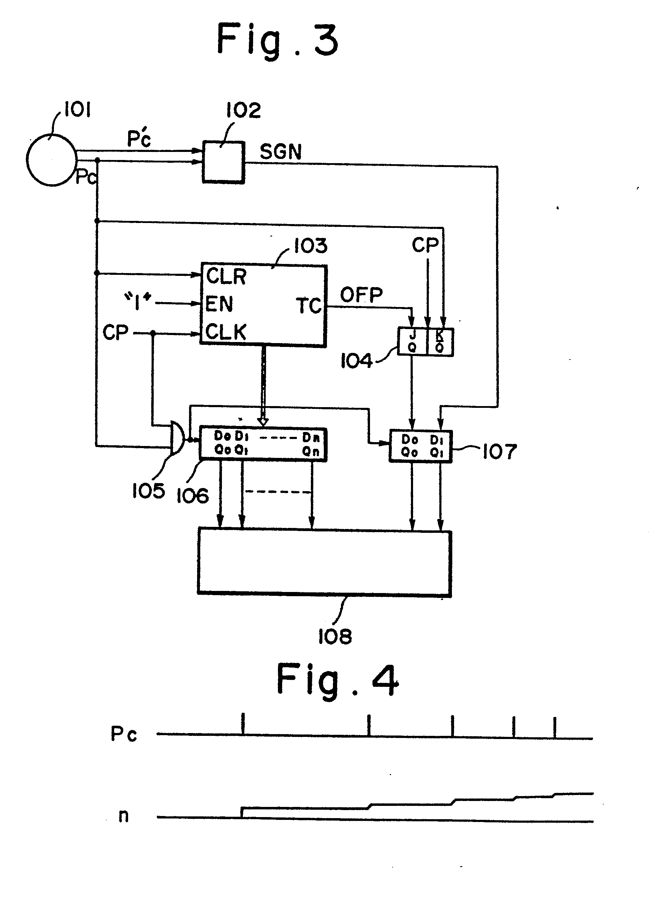

Fig. 1 is a block diagram of a conventional speed detecting circuit; Fig. 2 is an explanatory view for describing the defect of the conventional system; Fig. 3 is a block diagram of a speed detecting circuit according to the present invention; Fig. 4 is a waveform diagram of signal indicative of speed detected according to the present invention; and Fig. 5 is a block diagram of another embodiment according to the present invention.

Best Mode for Carrying out the Invention

Before giving a detailed description of an embodiment of the present invention with reference to the drawings, the principle of speed detection according to the invention will be described in brief.

In the present invention, the period T of pulses Pc generated by a pulse coder during rotation at low speed is timed, and the motor speed is detected using the period T. If we assume that N-number of clock pulses CP are generated in one period of the pulses Pc and that the period of the clock pulses is $\Delta T$ (=0.125 μsec), then the frequency $\underline{f}$ of the pulses Pc from the pulse coder may be expressed:

$$f = 1/T$$
$$= 1/N \cdot \Delta T \quad (\text{Hz/μsec})$$
$$= 10^6/N \cdot \Delta T \quad (\text{Hz/sec})$$
$$= 60 \times 10^6/N \cdot \Delta T \quad (\text{Hz/min})$$

Substituting 0.125 for $\Delta T$, we have:

$$f = 480 \times 10^6/N \ (\text{Hz/min}) \quad \ldots \ldots \ldots (1)$$

If the pulse coder produces 10,000 pulses per revolution, then the rotational speed $\underline{n}$ will be:

$$n = 48{,}000/N \text{ (rpm)} \qquad \ldots \ldots \ldots (2)$$

In the present invention, therefore, the rotational speed is detected using Eq. 1 or 2 upon finding the period T of the pulses Pc, namely the number N of clock pulses CP generated in one period of the pulses Pc, when the motor is rotating at low speed.

Fig. 3 is a block diagram illustrating an embodiment of the present invention .

In Fig. 3, numeral 101 denotes a pulse coder for producing two pulsed signals Pc, Pc' displaced in phase from each other by $\pi/2$, the pulses in each signal being generated whenever a motor, not shown, rotates by a predetermined amount. Numeral 102 denotes a rotational direction discriminating circuit for producing a rotational direction signal SGN upon sensing which of the pulsed signals Pc, Pc' leads in phase. Numeral 103 denotes a counter having a clear terminal CLR, a count enable terminal EN, a clock terminal CLK, and a carry pulse generating terminal TC. The pulsed signal Pc is applied to the clear terminal CLR, and logical "1" is constantly applied to the count enable terminal EN. The counter 103 consequently is cleared of its data each time a pulse Pc is generated, and counts up the clock pulses CP until the generation of the next pulse Pc. A flip-flop 104 is set each time a carry pulse OFP is generated, and is reset each time a pulse Pc is generated. Thus, the number of clock pulses generated in one period of the pulsed signal Pc is indicated by the counter 103 and flip-flop 104. It should be noted that the flip-flop 104 can be dispensed with if the counter 103 has a sufficiently large capacity. Numeral 105 denotes an AND gate, and 106 an n-bit register in which the value of the count in counter 103 is set whenever the output of AND gate 105 goes to logical "1", that is, whenever the pulse Pc is generated. Numeral 107 denotes a two-bit register in which the set output of flip-flop 104 and the rotational direction signal SGN ("1" for forward rotation, "0" for reverse rotation) are set each time the output of AND gate 105 goes to logical "1". Numeral 108 denotes a dividing unit which receives as inputs the data from registers 106, 107 to execute the arithmetic operation of Eq. (2), whereby the rotational speed $n$ is computed. The dividing unit 108 can be constructed by relying upon the dividing function of a microcomputer for digitally executing speed control. In particular, since modern microcomputers that permit 16-bit division in 10 μsec or less are available, the dividing unit can be realized quite simple by making use of such a microcomputer.

In Fig. 3, counter 103 and flip-flop 104 are reset whenever the pulse coder 101 generates the pulse Pc. Once reset, the counter 103 and flip-flop 104 cooperate to count N-number of clock pulses CP until the arrival of the next pulse Pc, thereby measuring the period of the pulses Pc. When said next pulse Pc is generated, the content of counter 103 and of flip-flop 104, as well as the rotational direction signal SGN, are set in registers 106, 107. At the same time, counter 103 and are reset again and start counting the clock pulses CP. The number N of clock pulses CP stored in the registers 106, 107 is read in appropriate fashion by the dividing unit 108 which then excutes the dividing operation of Eq. (2) to find the rotational frequency $\underline{n}$. Thus, in accordance with the method of Fig. 3, the detected speed is not intermittent even when the rotational speed $\underline{n}$ is very small, as shown in Fig. 4. This enables the speed to be detected with great accuracy. With the method of Fig. 3, however, the period T of the pulsed signal Pc becomes small at high speeds so that a detection error grows in magnitude when speed is detected in accordance with Eq. (1).

Fig. 5 is a block diagram of the present invention, wherein speed can be detected with great accuracy from very low to high speeds. In Fig. 5, numeral 201 denotes a pulse coder, 202 the high-speed detecting circuit illustrated in Fig. 1, 203 the low-speed detecting circuit illustrated in Fig. 3, 204 a switching circuit, and 205 a high-speed/low-speed discriminating circuit connected to the speed detecting circuits 202, 203 or to one of these circuits for discriminating whether the motor speed is in a high speed or low speed region. In accordance with the arrangement of Fig. 5, the switching circuit 204 delivers, as a speed data output, data nH from the high-speed detecting circuit 202 when the motor speed is in the high-speed region, and data nL from the low-speed detecting circuit 203 when the motor speed is in the low-speed region. When the motor is rotating at high speed, such as at 2000 r.p.m., the period of the pulses generated by the pulse coder 201 is 3 usec. Accordingly, highly accurate and sufficiently smoothed speed data can be produced even at a sampling period of 1 msec.

Industrial Applicability

According to the present invention as described hereinabove, motor speed during low-speed operation can be detected as a digital quantity with great accuracy without impairing motor response. Furthermore, speed detection with great accuracy from low to high speeds is capable of being achieved because switching in accordance with the speed of the motor is effected between the method of detecting speed based on counting the number of pulses Pc generated by the position coder, and the method of detecting speed based on timing the period of the pulses. The present invention therefore is well-suited for utilization in controlling the speed of motors.

CLAIMS

1. A speed detecting apparatus having a position sensor for generating pulses the number whereof is proportional to the amount of rotation of a motor or the amount of movement of a movable machine element, the speed of the motor or of the movable machine element being detected by using the pulses generated by the position sensor, characterized by including a counter which counts clock pulses for timing the period of the pulses generated by said position sensor, a register in which the content of the counter is set in synchronism with the pulses generated by said position sensor, and dividing means for performing binary or decimal division, wherein an arithmetic dividing operation is performed by said dividing means using the period stored in said register to detect the speed of the motor or movable machine element.

2. A speed detecting apparatus having a position sensor for generating pulses the number whereof is proportional to the amount of rotation of a motor or the amount of movement of a movable machine element, the speed of the motor or of the movable machine element being detected by using the pulses generated by the position sensor, characterized by including a first counter which counts clock pulses for timing the period of the pulses generated by said position sensor, a first register in which the content of said first counter is set in synchronism with the pulses generated by said position sensor, dividing means for performing binary or decimal division, a second counter for counting the number of pulses generated by said position sensor, and a second register in which the content or said second counter is set at regular intervals, wherein, during low-speed operation, an arithmetic dividing operation is performed by said dividing means using the period stored in said first register to detect the speed of the motor and, during high-speed operation, the number of pulses stored in said second register at regular intervals is used to detect speed, whereby the speed of the motor or of the movable machine element is detected during low-speed and high-speed operation.

**0078854**

# Fig.1

# Fig.2

# Fig.5

# Fig.3

# Fig.4

## INTERNATIONAL SEARCH REPORT

**0078854**

International Application No. **PCT/JP82/00176**

### I. CLASSIFICATION OF SUBJECT MATTER (if several classification symbols apply, indicate all) ³

According to International Patent Classification (IPC) or to both National Classification and IPC

Int. Cl.³ G01P 3/489

### II. FIELDS SEARCHED

Minimum Documentation Searched ⁴

| Classification System | Classification Symbols |
|---|---|
| IPC | G01P 3/48, G01P 3/481, G01P 3/489 |

| | Documentation Searched other than Minimum Documentation to the Extent that such Documents are Included in the Fields Searched ⁵ |
|---|---|
| | Jitsuyo Shinan Koho      1926 - 1982 <br> Kokai Jitsuyo Shinan Koho     1971 - 1982 |

### III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| X | JP,A, 48-60968 (Nippon Jidosha Buhin Sogo Kenkyusho Kabushiki Kaisha) 27. August. 1973 (27.08.73), Column 2, lines 6 to 15, columns 3 to 11, column 12, lines 1 to 10 | 1 |
| X | JP,A, 49-34371 (Hitachi, Ltd.) 29. March. 1974 (29.03.74), Column 2, lines 7 to 20, column 3, Column 4, lines 1 to 14, Fig. 1 | 1 |
| X | JP,A, 53-143378 (Hitachi, Ltd.) 13. December. 1978 (13.12.78) | 2 |

* Special categories of cited documents: ¹⁵
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance: the claimed invention cannot be considered to involve an inventive step when the document is combined with one or more other such documents, such combination being obvious to a person skilled in the art
"&" document member of the same patent family

### IV. CERTIFICATION

| Date of the Actual Completion of the International Search ² | Date of Mailing of this International Search Report ² |
|---|---|
| July 30, 1982 (30.07.82) | August 9, 1982 (09.08.82) |

| International Searching Authority ¹ | Signature of Authorized Officer ²⁰ |
|---|---|
| Japanese Patent Office | |

Form PCT/ISA/210 (second sheet) (October 1981)